# EUROPEAN PATENT APPLICATION

(11) **EP 4 838 192 A1**
(43) Date of publication of application: **11.11.2026**
(21) Application number: 26176661.2
(22) Date of filing: 05.05.2026
(51) Int. Cl.: G01M 3/28, G01F 25/10

(54) **SYSTEM AND METHOD FOR DETERMINING ANOMALY IN A GAS METER**

(30) Priority: 05.05.2025 IN 202511043496
(71) Applicant: Honeywell International Inc., Charlotte, NC 28202 (US)
(72) Inventor: SCOGGINS, Sean Michael, Charlotte, 28202 (US); KELLEY, Raymond H., Charlotte, 28202 (US); BEZAWADA, Murali Krishna, Charlotte, 28202 (US); ORME, Michael Todd, Charlotte, 28202 (US); SA, Churan, Charlotte, 28202 (US)
(74) Representative: Haseltine Lake Kempner LLP

(57) **Abstract**

A system is disclosed. The system comprising a gas meter installed within a site, a plurality of sensors coupled to the gas meter, each of the plurality of sensors are configured to generate data corresponding to detection of gas temperature, pressure of gas, and flow of gas within the gas meter, and at least one processor communicatively coupled to each of the plurality of sensors. At least one processor is configured to receive the data, determine that there is no flow of gas within the gas meter, determine fluctuations in the gas temperature upon determining that there is no flow of gas, determine whether there are fluctuations in the pressure of gas within the gas meter, upon determining the fluctuations in the gas temperature, and determine an anomaly in the gas meter upon determining that there is no fluctuation in the pressure of gas within the gas meter.

## Description

### TECHNOLOGICAL FIELD

Example embodiments of the present disclosure relate generally to a gas leakage detection system, and more particularly, to a system and method for determining anomaly in a gas meter.

### BACKGROUND

In various industrial and household applications, gas supply grids are widely used for delivering gases (e.g., natural gases) safely and efficiently. The gas supply grids comprise a network of pipelines, gas meters, regulators, valves, and various other equipment responsible for delivering the gases. It is crucial to manage the gas supply grids to meet demands of the various industrial and household applications while ensuring safety, minimizing environmental impact, and optimizing operational efficiency. However, while addressing these demands, the gas supply grids encounter challenges such as gas leakage, equipment failures, and undesired shutdowns. Such gas leakages generally lead to product loss for gas utility, raises safety concerns, and contributes to greenhouse gas emissions. In an equipment such as mechanical gas meters, leaks often occur between a service pressure regulator and the meter or within the meter, potentially resulting in unregistered gas usage. Additionally, defective meters often fail to register gas usage due to mechanical component failures or sensor malfunctions.

The inventors identified numerous deficiencies and problems in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system is disclosed. The system comprising a gas meter installed within a site and a plurality of sensors coupled to the gas meter. Each of the plurality of sensors are configured to generate data corresponding to detection of gas temperature, pressure of gas, and flow of gas within the gas meter. Further, the system comprises at least one processor communicatively coupled to each of the plurality of sensors. Further, the at least one processor is configured to receive the data corresponding to the measurement of the gas temperature, the pressure of gas, and the flow of gas within the gas meter; determine that there is no flow of gas within the gas meter; determine fluctuations in the gas temperature upon determining that there is no flow of gas within the gas meter; determine whether there are fluctuations in the pressure of gas within the gas meter, upon determining the fluctuations in the gas temperature; and determine an anomaly in the gas meter upon determining that there is no fluctuation in the pressure of gas within the gas meter.

In some embodiments, the plurality of sensors comprises at least one of a flow sensor, a temperature sensor, and a pressure sensor. In some embodiments, the flow sensor is configured to determine the flow of gas within the gas meter. In some embodiments, the temperature sensor is configured to determine the gas temperature. In some embodiments, the pressure sensor is configured to determine the pressure of the gas flowing within the gas meter.

In some embodiments, the at least one processor is configured to determine that the gas meter is operating in a normal condition upon determining that there is fluctuation in the pressure of gas within the gas meter.

In some embodiments, the at least one processor is configured to determine whether there are fluctuations in pressure of gas within another gas meter installed within the site, upon determining the anomaly in the gas meter. In some embodiments, the at least one processor is configured to determine an upstream grid anomaly upon determining that there are no fluctuations in the pressure of gas within the another gas meter.

In some embodiments, the at least one processor is configured to determine whether the pressure of the gas within the another gas meter is normal upon determining that there are fluctuations in the pressure of gas within the another gas meter. In some embodiments, the at least one processor is configured to determine an anomaly in a regulator associated with the gas meter and the another gas meter, upon determining that the pressure of the gas within the another gas meter is not normal.

In some embodiments, the at least one processor is configured to determine a leak within the gas meter at the site, upon determining that the pressure of the gas within the another gas meter is normal.

In some embodiments, the at least one processor is further configured to generate an alert for a user upon determining the anomaly in the gas meter. In some embodiments, the at least one processor is configured to send the generated alert to the user by using a communication module. Further, the generated alert corresponds to a notification comprising at least one type of anomaly determined in the gas meter and one or more actions to be taken by the user corresponding to the type of anomaly. In some embodiments, the type of anomaly comprises at least one of leak within the gas meter at the site, anomaly in a regulator, and an upstream grid anomaly, and the one or more actions comprise at least one of alerting a gas supply grid, change or repair the gas meter, change or repair the regulator.

In some embodiments, a method is disclosed. The method comprises receiving, via at least one processor communicatively coupled to a plurality of sensors of a gas meter installed within a site, data corresponding to measurement of gas temperature, pressure of gas, and flow of gas within the gas meter; determining, via the at least one processor, that there is no flow of gas within the gas meter; determining, via the at least one processor, fluctuations in the gas temperature upon determining that there is no flow of gas within the gas meter; determining, via the at least one processor, whether there are fluctuations in the pressure of gas within the gas meter, upon determining the fluctuations in the gas temperature; and determining, via the at least one processor, an anomaly in the gas meter upon determining that there is no fluctuation in the pressure of gas within the gas meter.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system to determine anomaly in a gas meter in accordance with an example embodiment of the present disclosure;
FIG. 2 illustrates an architectural view of the system in accordance with an example embodiment of the present disclosure;
FIG. 3 illustrates a detailed flowchart showing operations of at least one processor of the system in accordance with an example embodiment of the present disclosure;
FIGS. 4A-4C illustrate graphical representations showing response of the gas meter in accordance with an example embodiment of the present disclosure; and
FIG. 5 illustrates a flowchart showing a method to determine anomaly in the gas meter in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a system and method to determine anomaly in a gas meter. Embodiments may comprise a gas meter installed within a site and a plurality of sensors coupled to the gas meter. Each of the plurality of sensors may be configured to generate data corresponding to detection of gas temperature, pressure of gas, and flow of gas within the gas meter. Embodiments may comprise at least one processor communicatively coupled to each of the plurality of sensors. Embodiments may be configured to receive the data corresponding to the measurement of the gas temperature, the pressure of gas, and the flow of gas within the gas meter by the at least one processor. Embodiments may be configured to determine that there is no flow of gas within the gas meter by the at least one processor. Embodiments may be configured to determine fluctuations in the gas temperature upon determining that there is no flow of gas within the gas meter, by the at least one processor. Embodiments may be configured to determine whether there are fluctuations in the pressure of gas within the gas meter, upon determining the fluctuations in the gas temperature, by the at least one processor. Embodiments may be configured to determine an anomaly in the gas meter upon determining that there is no fluctuation in the pressure of gas within the gas meter, by the at least one processor.

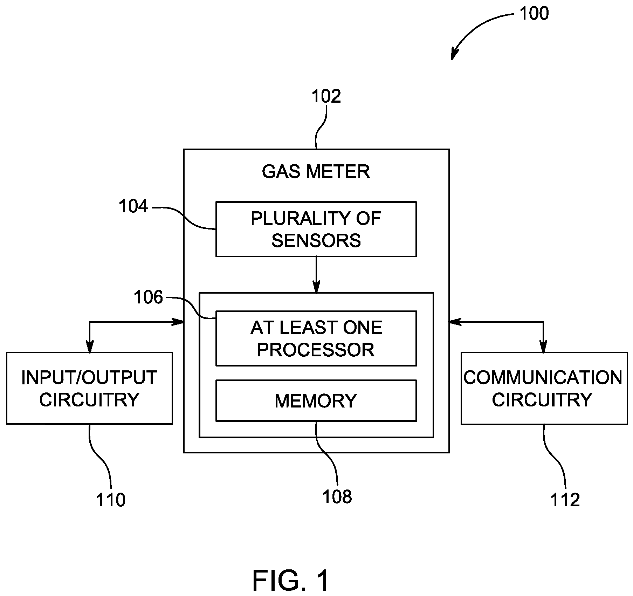

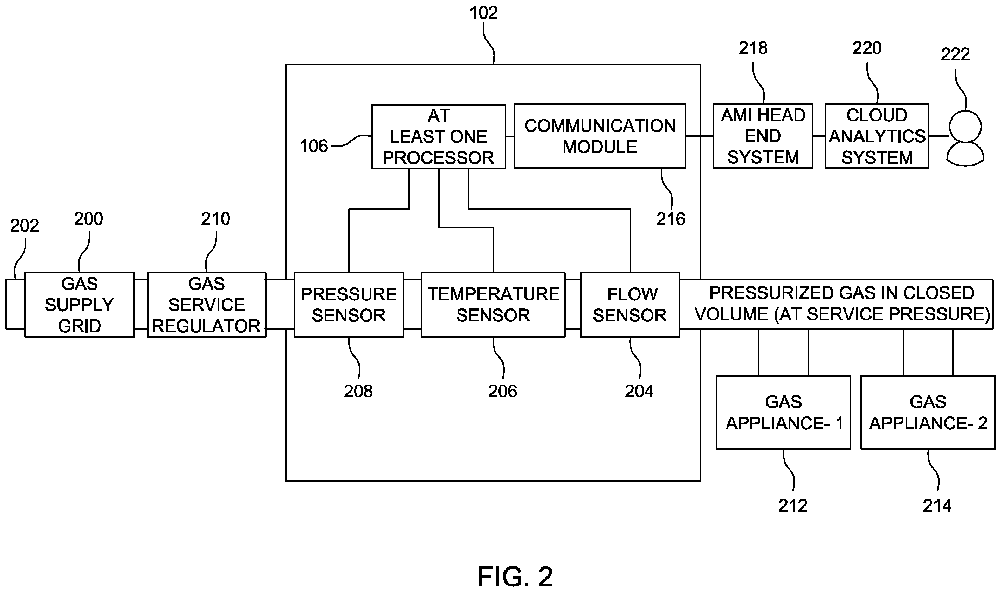

FIG. 1 illustrates a block diagram of a system 100 to determine anomaly in a gas meter 102, in accordance with an example embodiment of the present disclosure. FIG. 2 illustrates an architectural view of the system 100, in accordance with an example embodiment of the present disclosure.

In some embodiments, the system 100 may comprise the gas meter 102 having a plurality of sensors 104, at least one processor 106, and a memory 108. Further, the system 100 may comprise an input/output circuitry 110 and a communication circuitry 112. In some embodiments, the system 100 may be communicatively coupled with a gas supply grid 200 (FIG. 2). In some embodiments, the gas supply grid 200 may be configured to supply gas from a production source (not shown) to a plurality of end-users (not shown). In some embodiments, the gas may correspond to at least one of a natural gas, propane, and hydrogen. In some embodiments, the gas supply grid 200 may be connected with a pipeline network 202 (FIG. 2). Further, the pipeline network 202 may be configured to supply the production source to the plurality of end-users.

In some embodiments, the gas supply grid 200 may be connected with the gas meter 102. In some embodiments, the gas meter 102 may be installed within a site (not shown). In some embodiments, the site may correspond to at least one of a manufacturing plant, warehouse, gas refinery, etc. In some embodiments, the gas meter 102 of the gas supply grid 200 may be configured to measure an amount of the gas consumed by the plurality of end-users. In some embodiments, the plurality of end-users may be categorized into residential, commercial, and industrial. In some embodiments, the gas meter 102 may correspond to at least one of an analog gas meter, and/or a digital gas meter. In some embodiments, the analog gas meter may be configured to provide analog readings of the amount of the gas consumed by the plurality of end-users. In some embodiments, the digital gas meter may be configured to provide digital readings of the amount of the gas consumed by the plurality of end-users. In some embodiments, the gas meter 102 may be coupled with the pipeline network 202 to measure the amount of the gas supplied through the pipeline network 202.

In some embodiments, the gas meter 102 may comprise the plurality of sensors 104. In some embodiments, the plurality of sensors 104 may comprise at least one of a flow sensor 204 (FIG. 2), a temperature sensor 206 (FIG. 2), and a pressure sensor 208 (FIG. 2). In some embodiments, the plurality of sensors 104 may be configured to generate data corresponding to detection of gas temperature, pressure of gas, and flow of gas within the gas meter 102. In some embodiments, the flow sensor 204 may be configured to determine the flow of gas within the gas meter 102. In some embodiments, the flow sensor 204 may comprise at least one of a piezo-resistive flow sensor, capacitive flow sensor, resonant flow sensor, thermal conductive flow sensor, etc. In some embodiments, the temperature sensor 206 may be configured to determine temperature of gas within the gas meter 102. In some embodiments, the temperature sensor 206 may comprise at least one of a thermocouple, resistance temperature detector (RTD), thermistor, infrared (IR) sensor, etc. In some embodiments, the pressure sensor 208 may be configured to determine a pressure of the gas flowing through the gas meter 102. In some embodiments, the pressure sensor 208 may comprise at least one of a piezo-resistive pressure sensor, capacitive pressure sensor, resonant pressure sensor, thermal conductive pressure sensor, optical pressure sensor, etc.

In some embodiments, the gas meter 102 may further comprise the at least one processor 106. In some embodiments, the plurality of sensors 104 of the gas meter 102 may be communicatively coupled with the at least one processor 106. In some embodiments, the at least one processor 106 may include suitable logic, circuitry, and/or interfaces that are operable to execute one or more instructions stored in the memory 108 to perform predetermined operations. In one embodiment, the at least one processor 106 may be configured to decode the one or more instructions and execute the one or more instructions that are stored within the memory 108. The at least one processor 106 may be configured to execute one or more computer-readable program instructions, such as program instructions to carry out any of the functions described in this description. Further, the at least one processor 106 may be implemented using one or more processor technologies known in the art such as central processing unit (CPU), field-programmable gate array (FPGA), digital signal processors (DSP), etc. Examples of the at least one processor 106 may comprise at least one of, one or more general purpose processors and/or one or more special purpose processors that may be designed to handle the gas supply grid 200.

In some embodiments, the at least one processor 106 may be configured to receive the data corresponding to the measurement of the gas temperature, the pressure of gas, and the flow of gas within the gas meter 102. In some embodiments, the at least one processor 106 may be configured receive the data from the plurality of sensors 104 of the gas meter 102. Further, the at least one processor 106 may be configured to receive the data corresponding to the measurement of the gas temperature, the pressure of gas, and the flow of gas within the gas meter 102 within different timestamps. Further, the at least one processor 106 may be configured to create one or more datasets from the data received from the plurality of sensors 104. In some embodiments, the at least one processor 106 may be configured to determine that there is no flow of gas within the gas meter 102. In some embodiments, the flow sensor 204 of the gas meter 102 may facilitate the at least one processor 106 to determine that there is no flow gas within the gas meter 102. In some embodiments, the no flow of gas within the gas meter 102 may represent that there is no usage of the gas by the plurality of end-users.

In some embodiments, the at least one processor 106 may be configured to determine fluctuations in the gas temperature. In some embodiments, the fluctuations in the gas temperature may be detected upon determining that there is no flow of gas within the gas meter 102. In some embodiments, the at least one processor 106 may be configured to fetch the one or more datasets of the data received from the temperature sensor 206 of the gas meter 102. In some embodiments, the at least one processor 106 may be configured to analyze patterns based at least on the one or more datasets. In some embodiments, the at least one processor 106 may be configured to determine the fluctuations in the gas temperature through the analyzed patterns. For example, the gas temperature received by the at least one processor 106 at different timestamps is 50 degrees Celsius at 2:30 pm, 55 degrees Celsius at 2:45 pm, 53 degrees Celsius at 3:05 pm, and 80 degrees Celsius at 3:15 pm, then based at least on this pattern of the data, a sudden rise (i.e., fluctuations) of 30 degrees Celsius in the gas temperature is determined by the at least one processor 106 from 3:05 pm to 3:15 pm.

In some embodiments, the at least one processor 106 may further be configured to receive the pressure of gas in real-time. Further, the at least one processor 106 may be configured to create one or more datasets from the data received from the pressure sensor 208. For example, the pressure of gas received in real-time is 20 psi at 2:30 pm, 25 psi at 2:45 pm, 23 psi at 2:50 pm, and 28 psi at 3:15 pm. In some embodiments, the at least one processor 106 may be configured to analyze the one or more datasets having data received from the pressure sensor 208. In some embodiments, the at least one processor 106 may be configured to determine whether there are fluctuations in the pressure of gas within the gas meter 102, upon determining the fluctuations in the gas temperature within the same timestamps. For example, the at least one processor 106 determines there is a constant flow of the pressure of gas from 2:30 pm to 3:15 pm. In some embodiments, the at least one processor 106 may be configured to determine an anomaly in the gas meter 102 upon determining that there is no fluctuation in the pressure of gas within the gas meter 102. In some embodiments, the anomaly may comprise at least one of leak within the gas meter 102 at the site, anomaly in a regulator (i.e., a gas service regulator 210), and an upstream grid anomaly. In some embodiments, the at least one processor 106 may be configured to generate an alert for a user upon determining the anomaly in the gas meter 102. In some embodiments, the alert may comprise at least one of a visual alert, audio alert, graphical alert, etc. In some embodiments, the at least one processor 106 may be configured to send the generated alert to the user by using a communication module. In one example, the communication module 216 (FIG. 2) may correspond to a Bluetooth module. In another example, the communication module 216 may correspond to a wireless-fidelity (Wi-Fi) module. In some embodiments, the generated alert may correspond to a notification comprising at least one type of the anomaly determined in the gas meter and one or more actions to be taken by the user corresponding to the type of anomaly. In some embodiments, the type of anomaly may comprise at least one of leak within the gas meter 102 at the site, anomaly in the regulator (i.e., a gas service regulator 210), and an upstream grid anomaly. In some embodiments, the one or more actions may comprise at least one of alerting the gas supply grid 200, change the gas meter 102, or repair the gas meter 102.

In some embodiments, the memory 108 may be configured to store the one or more datasets associated with the data received by the at least one processor 106 from the plurality of sensors 104. It is apparent to a person with ordinary skill in the art that the one or more instructions stored in the memory 108 enable the hardware of the system 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the at least one processor 106 may further comprise the input/output circuitry 110. The input/output circuitry 110 may enable the user to communicate or interface with the system 100, via a user device (not shown). The user device may include N number of user devices. In some embodiments, the input/output circuitry 110 may act as a medium to transmit input from the interface to and from the at least one processor 106. In some embodiments, the input/output circuitry 110 may refer to the hardware and software components that facilitate the exchange of information between the user device and the at least one processor 106. In one example, the system 100 may include the user interface as an input circuitry that facilitates monitoring of the data of the plurality of sensors 104 of the gas meter 102. The input/output circuitry 110 may include various input devices such as the plurality of sensors 104 of the gas meter 102 and various output devices such as a display unit, printers for the one or more users to receive data. In another example, the input/output circuitry 110 may include various output circuitry such as the display unit.

In some embodiments, the at least one processor 106 may further comprise the communication circuitry 112. The communication circuitry 112 may allow the at least one processor 106 to exchange data or information with the gas meter 102, other systems or apparatuses. Further, the communication circuitry 112 may include network interfaces, protocols, and software modules responsible for sending and receiving data or information from the user device. In some embodiments, the communication circuitry 112 may include Ethernet ports, Wi-Fi adapters, or communication protocols like HTTP or MQTT for connecting with other systems. The communication circuitry 112 may further include components such as communication modules (e.g., Wi-Fi, Ethernet, RF, cellular), transceivers, antennas, and protocols (e.g., TCP/IP, MQTT, SNMP) for exchanging data with the user device and the other systems. The communication circuitry 112 may allow the system 100 to stay up-to-date.

In some embodiments, the system 100 may be operationally coupled with the gas supply grid 200. In some embodiments, the gas supply grid 200 may be configured to perform one or more operations while supplying the gas from the production source to the plurality of end-users. Further, the one or more operations may comprise gas production, gas storage, gas transmission, gas distribution, and monitoring and control.

In some embodiments, the gas supply grid 200 may be configured to perform the gas production operation to extract the gas from natural gas fields, or produce the gas in refineries (e.g., natural gases are extracted from underground reservoirs, and liquefied petroleum gas (LPG) is produced through refining processes from crude oil or natural gas). In some embodiments, the gas storage operation may involve storing of the gas in a controlled environment (not shown) until its distribution. Further, the controlled environment may correspond to at least one of an underground storage in geological formations, pressurized tanks, and cylinders (e.g., the natural gases are stored in the underground storage facilities such as depleted gas reservoirs or salt caverns, and the LPG is stored in pressurized tanks or cylinders). In some embodiments, the gas supply grid 200 may be configured to perform the gas transmission operation to transport the gas from the source to various distribution points through the pipeline network 202. Further, the gas supply grid 200 may be configured to perform the gas distribution operation to distribute the gas from the pipeline network 202 to the plurality of end-users.

In some embodiments, the gas supply grid 200 may be configured to perform the monitoring and control operation to oversee and manage supply of the gas from the production source to the plurality of end-users. In some embodiments, the monitoring and control operation may involve one or more components such as the gas meter 102, and the plurality of sensors 104. In some embodiments, the gas supply grid 200 may be configured to supply the gas from the production source to the plurality of end-users. In some embodiments, the gas supply grid 200 may be operationally coupled with the pipeline network 202, and one or more compressor stations (not shown). In some embodiments, the pipeline network 202 may be connected between the gas meter 102 and the production source. In some embodiments, the pipeline network 202 may be configured to facilitate transportation of the gas from the production source to the plurality of end-users. In some embodiments, the one or more compressor stations may be equidistantly connected with the pipeline network 202. In some embodiments, the one or more compressor stations may be configured to maintain an optimum pressure of the gas within the pipeline network 202. In some embodiments, the one or more compressor stations may be configured to ensure a proper flow of the gas through the pipeline network 202.

In some embodiments, the gas supply grid 200 may be operationally connected with the gas meter 102 through the gas service regulator 210. In some embodiments, the gas meter 102 may be configured to measure the amount of gas consumed by the plurality of end-users. Further, the plurality of end-users may correspond to a gas appliance-1 212 and a gas appliance-2 214. In some embodiments, the gas service regulator 210 may be configured to regulate pressure of the gas flowing through the pipeline network 202. In some embodiments, the gas meter 102 may further comprise the plurality of sensors 104. In some embodiments, the plurality of sensors 104 may comprise at least one of the flow sensor 204, the temperature sensor 206, and the pressure sensor 208. In some embodiments, the plurality of sensors 104 may be configured to generate the data corresponding to detection of the gas temperature, the pressure of gas, and the flow of gas within the gas meter 102.

In some embodiments, the gas meter 102 may further comprise the at least one processor 106. In some embodiments, the at least one processor 106 may be configured to receive the data corresponding to the measurement of the gas temperature, the pressure of gas, and the flow of gas within the gas meter 102 from the plurality of sensors 104 of the gas meter 102. In some embodiments, the at least one processor 106 may be communicatively coupled with a communication module 216. In one example, the communication module 216 may correspond to a Bluetooth module. In another example, the communication module 216 may correspond to a wireless-fidelity (Wi-Fi) module. In some embodiments, the communication module 216 may facilitate the at least one processor 106 to send the data corresponding to the measurement of the gas temperature, the pressure of gas, and the flow of gas within the gas meter 102, to an advanced metering infrastructure (AMI) head end system 218. In some embodiments, the AMI head end system 218 may be configured to receive the data from the at least one processor 106 via the communication module 216.

In some embodiments, the AMI head end system 218 may be communicatively coupled with the gas meter 102 installed within the site and other similar meters. In some embodiments, the AMI head end system 218 may be configured to receive a combined data from the gas meter 102 and other similar meters installed within the site. In one example, the AMI head end system 218 may comprise a network of gas meters, a communication network, and a data management system. In some embodiments, the AMI head end system 218 may be communicatively coupled with a cloud analytics system 220. In some embodiments, the AMI head end system 218 may be configured to send the data to the cloud analytics system 220 through a communication network (not shown) (e.g., a cellular network, a dedicated wide-area network (WAN), or even through the internet using protocols like MQTT (Message Queuing Telemetry Transport) or HTTPS (Hypertext Transfer Protocol Secure)).

In some embodiments, the cloud analytics system 220 may be configured to perform one or more operations. In some embodiments, the one or more operations may comprise data storage, data integration and transformation, data processing and analytics, and alerts and notifications. In some embodiments, the cloud analytics system 220 may be configured to perform the data storage operation that involves segregation of the raw data received from the AMI head end system 218. In some embodiments, the cloud analytics system 220 may be configured to perform data integration and transformation operation that involves integration of the data received from the AMI head end system 218 with other relevant data sources, such as weather data, customer (i.e., the plurality of end-users) information. In some embodiments, the cloud analytics system 220 may be configured to perform the data processing and analytics operation that involves calculation of gas consumption, and usage pattern of the gas by the plurality of end-users. In some embodiments, the cloud analytics system 220 may be configured to perform the alerts and notifications operation that involves notifying an operator 222 regarding potential metering malfunctions, and alerting the customers (i.e. the plurality of end-uses) regarding unusual high consumption of the gas.

It will be apparent to one skilled in the art the above-mentioned components of the system 100 have been provided only for illustration purposes, without departing from the scope of the disclosure.

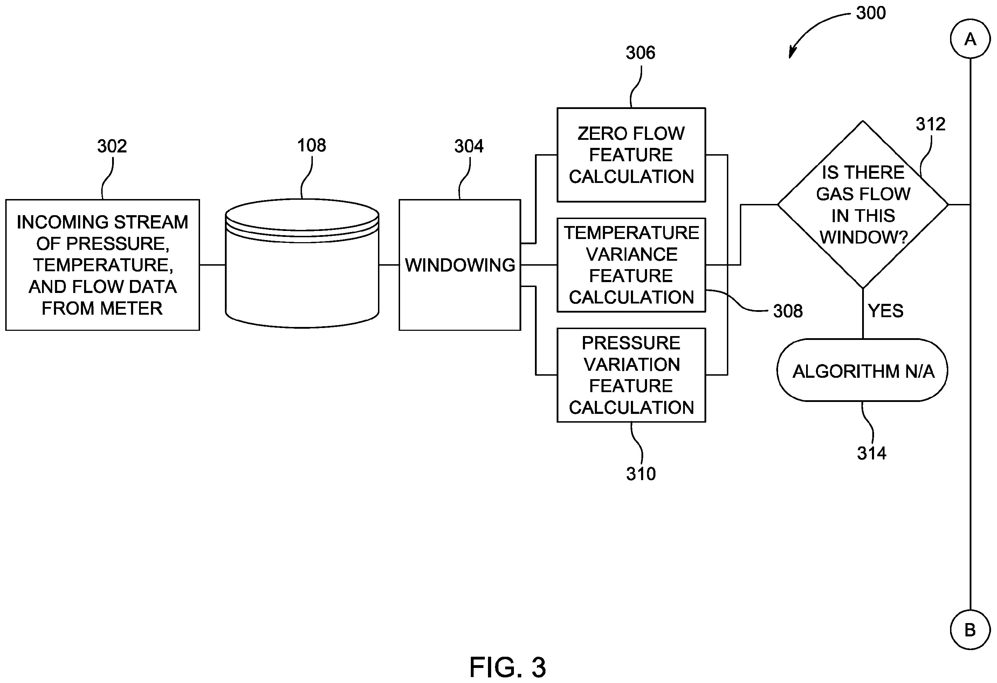

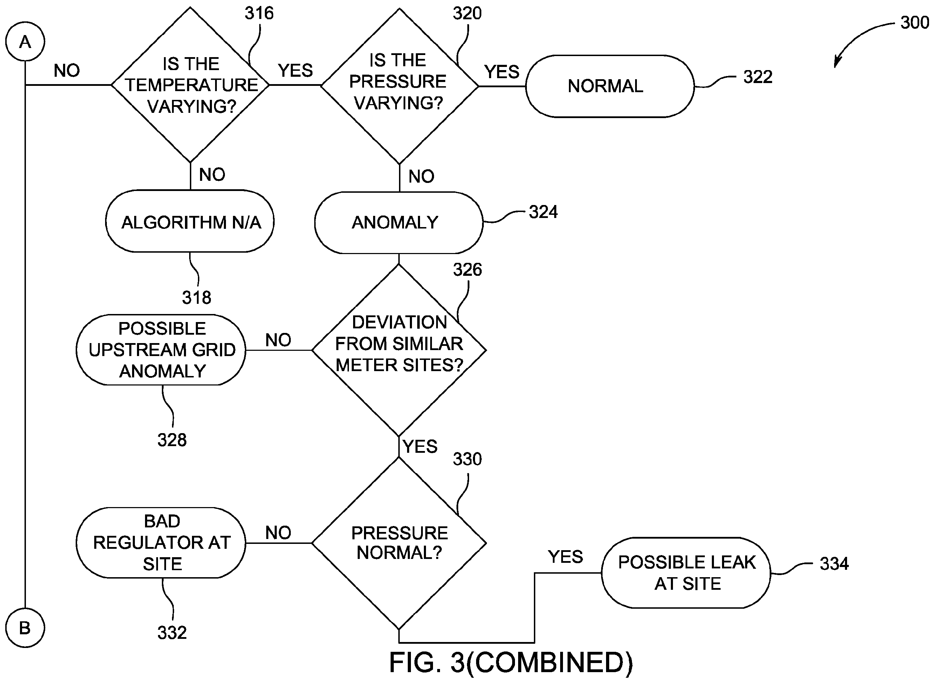

FIG. 3 illustrates a detailed flowchart 300 showing operations of the at least one processor 106 of the system 100, in accordance with an example embodiment of the present disclosure.

In some embodiments, the at least one processor 106 may be communicatively coupled with the gas meter 102. In some embodiments, the at least one processor 106 may be configured to perform one or more operations from the data received from the gas meter 102. At operation 302, the at least one processor 106 may be configured to receive the data from the gas meter 102. In some embodiments, the data may correspond to an incoming stream of pressure of gas, gas temperature, and flow of gas. In some embodiments, the at least one processor 106 may be communicatively coupled with the memory 108. In some embodiments, the at least one processor 106 may be configured to store the data into the memory 108. At operation 304, the at least one processor 106 may be configured to perform windowing of the data stored into the memory 108. In some embodiments, the windowing of data received from the memory 108 may involves segmenting of the continuous steam of the data into discrete time-based intervals. Further, these discrete time-based intervals may also be referred as "window". For example, the at least one processor 106 is configured to segment the continuous stream of data into segments of the data received at a regular time interval (e.g., every 15 minutes).

At operation 306, the at least one processor 106 may be configured to perform a zero flow feature calculation. At operation 308, the at least one processor 106 may be configured to perform a temperature variance feature calculation. At operation 310, the at least one processor 106 may be configured to perform a pressure variation feature calculation. In some embodiments, the zero flow feature calculation, temperature variance feature calculation, and pressure variation feature calculation may be performed by the at least one processor 106 from the data received from the plurality of sensors 104 of the gas meter 102. At operation 312, the at least one processor 106 may be configured to determine whether there is no flow of gas within the gas meter 102. At operation 314, upon determining that there is a flow of gas within the gas meter 102, the at least one processor 106 may be configured to stop operation. At operation 316, the at least one processor 106 may be configured to determine whether there are fluctuations in the gas temperature upon determining that there is no flow of gas within the gas meter 102. At operation 318, upon determining that there are no fluctuations in the gas temperature, the at least one processor 106 may be configured to stop the operation. In some embodiments, the fluctuations in the gas temperature may be detected upon determining that there is no flow of gas within the gas meter 102. At operation 320, the at least one processor 106 may be configured to determine whether there are fluctuations in the pressure of gas within the gas meter 102, upon determining the fluctuations in the gas temperature. At operation 322, upon determining that there are fluctuations in the pressure of gas, the at least one processor 106 may be configured to provide a result that the gas meter 102 is operating in a normal condition.

At operation 324, the at least one processor 106 may be configured to determine the anomaly in the gas meter 102 upon determining that there is no fluctuation in the pressure of gas within the gas meter 102. In some embodiments, the anomaly may comprise at least one of leak within the gas meter 102 at the site, anomaly in a regulator (i.e., the gas service regulator 210), and an upstream grid anomaly. At operation 326, the at least one processor 106 may be configured to determine whether there are fluctuations in pressure of gas within another gas meter installed within the site, upon determining the anomaly in the gas meter 102. In some embodiments, the another gas meter may also be coupled with the gas supply grid 200 and the gas service regulator 210. At operation 328, the at least one processor 106 may be configured to determine an upstream grid anomaly upon determining that there are no fluctuations in the pressure of gas within the another gas meter. In some embodiments, the upstream grid anomaly may correspond to unusual gas consumption pattern, faulty infrastructure of the gas supply grid 200, external cyberattacks, energy insufficiency, etc.

At operation 330, the at least one processor 106 may be configured to determine whether the pressure of the gas within the another gas meter is normal upon determining that there are fluctuations in the pressure of gas within the another gas meter. At operation 332, the at least one processor 106 may be configured to determine an anomaly in a regulator (i.e., the gas service regulator 210) associated with the gas meter 102 and the another gas meter, upon determining that the pressure of the gas within the another gas meter is not normal. At operation 334, the at least one processor 106 may be configured to determine a leak within the gas meter 102 at the site, upon determining that the pressure of the gas within the another gas meter is normal.

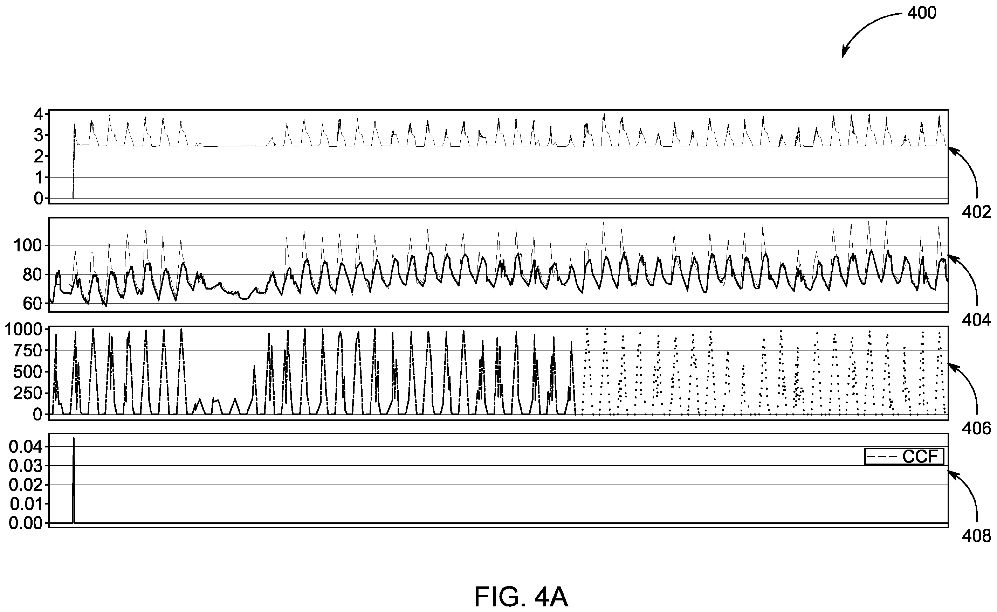

FIGS. 4A-4C illustrate graphical representations showing response of the gas meter 102, in accordance with an example embodiment of the present disclosure.

In some embodiments, a graphical representation 400 may be configured to represent the data corresponding to detection of gas temperature, pressure of gas, and flow of gas within the gas meter 102. In some embodiments, the graphical representation 400 may comprise one or more trends. Further, a trend 402 may be associated with the pressure of gas. Further, a trend 404 may be associated with the gas temperature, a trend 406 may be associated with solar radiations in proximity to the gas meter 102, and a trend 408 may be associated with the flow of gas within the gas meter 102. In some embodiments, the plurality of sensors 104 of the gas meter 102 may be configured to generate the data corresponding to detection of gas temperature, pressure of gas, and flow of gas within the gas meter 102. Further, the pressure sensor 208 may be configured to provide the pressure of gas within the gas meter 102. Further, the temperature sensor 206 may be configured to provide the gas temperature. Further, the flow sensor 204 may be configured to provide the flow of gas within the gas meter 102.

In some embodiments, based at least on the data represented by the graphical representation 400, the at least one processor 106 may determine that there are fluctuations in the gas temperature due to the fluctuations in the solar radiations. Further, the at least one processor 106 may determine the fluctuations in the pressure of gas within the gas meter 102 due to the fluctuations in the gas temperature. Further, the at least one processor 106 may determine there is no flow of the gas within the gas meter 102. It may be concluded that, based at least on the data represented by the graphical representation 400, the at least one processor 106 may determine there is no anomaly and the gas meter 102 is operating in a normal condition.

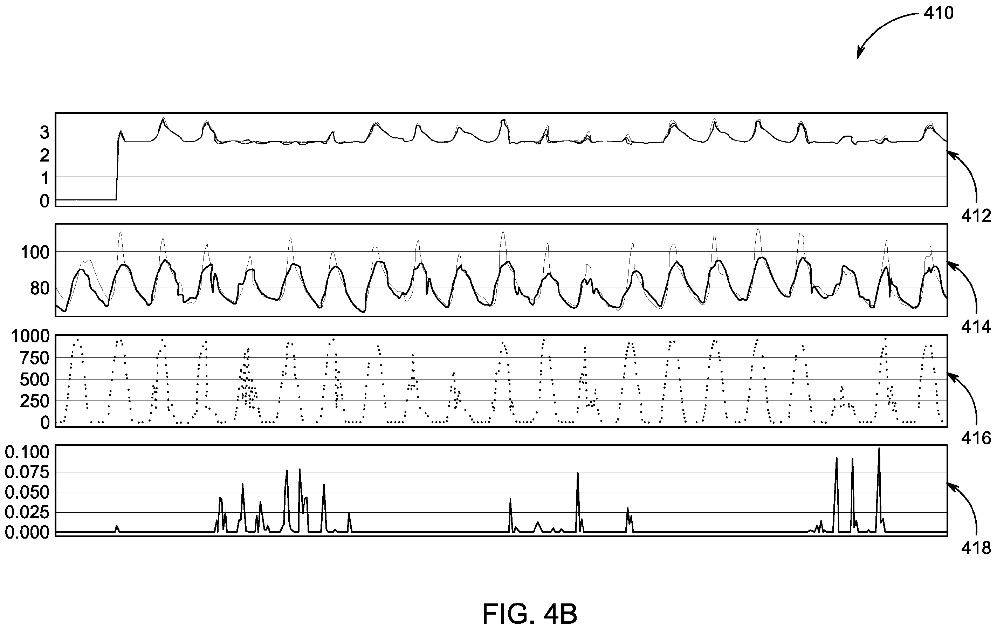

As illustrated in FIG. 4B, a graphical representation 410 may be configured to represent the data corresponding to detection of gas temperature, pressure of gas, and flow of gas within the gas meter 102. In some embodiments, the graphical representation 410 may comprise one or more trends. Further, a trend 412 may be associated with the pressure of gas. Further, a trend 414 may be associated with the of gas temperature, a trend 416 may be associated with solar radiations in proximity to the gas meter 102, and a trend 418 may be associated with the flow of gas within the gas meter 102. In some embodiments, based at least on the data represented by the graphical representation 410, the at least one processor 106 may determine that there are no fluctuations in the gas temperature and solar radiations. Further, the at least one processor 106 may determine the fluctuations in the pressure of gas within the gas meter 102. Further, the at least one processor 106 may determine there is a flow of the gas within the gas meter 102 (i.e., representing usage of the gas by the plurality of end-users). It may be concluded that, based at least on the data represented by the graphical representation 410, the at least one processor 106 may determine there is no anomaly in the data and the gas meter 102 is operating in the normal condition.

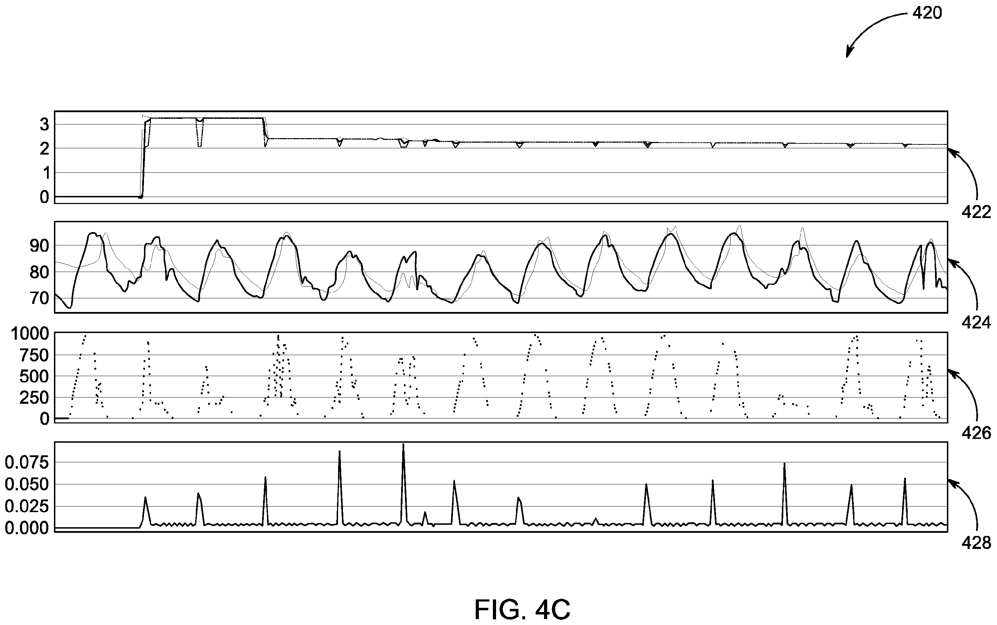

As illustrated in FIG. 4C, a graphical representation 420 may be configured to represent the data corresponding to detection of gas temperature, pressure of gas, and flow of gas within the gas meter 102. In some embodiments, the graphical representation 420 may comprise one or more trends. Further, a trend 422 may be associated with the pressure of gas. Further, a trend 424 may be associated with the of gas temperature, a trend 426 may be associated with solar radiations in proximity to the gas meter 102, and a trend 428 may be associated with the flow of gas within the gas meter 102. In some embodiments, based at least on the data represented by the graphical representation 420, the at least one processor 106 may determine that there are no fluctuations in the gas temperature and solar radiations. Further, the at least one processor 106 may determine the is a gradual decrease in the pressure of gas within the gas meter 102. Further, the at least one processor 106 may determine there is a uniform flow of the gas within the gas meter 102 (i.e., representing usage of the gas by the plurality of end-users). It may be concluded that, based at least on the data represented by the graphical representation 420, the at least one processor 106 may determine there is anomaly in the data and the gas meter 102 is not operating in the normal condition.

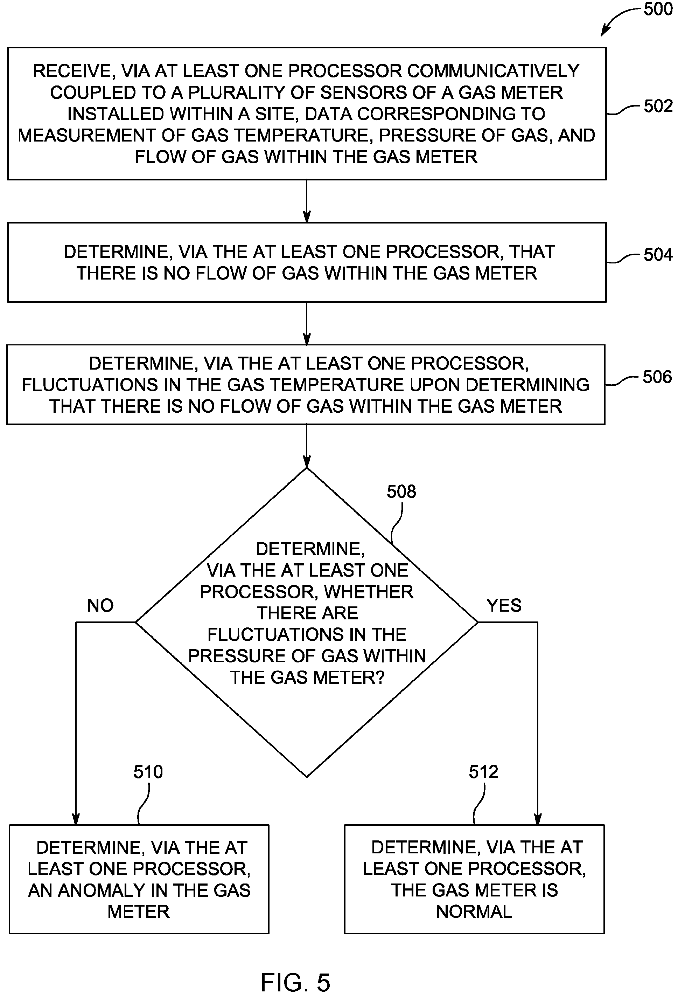

FIG. 5 illustrates a flowchart showing a method 500 to determine anomaly in the gas meter 102, in accordance with an example embodiment of the present disclosure.

At operation 502, the at least one processor 106 communicatively coupled to the plurality of sensors 104 of the gas meter 102 may be configured to receive the data corresponding to the measurement of gas temperature, pressure of gas, and flow of gas within the gas meter 102. In some embodiments, the gas meter 102 may be installed within the site. Further, the plurality of sensors 104 may comprise at least one of the flow sensor 204, the temperature sensor 206, and the pressure sensor 208. In some embodiments, the flow sensor 204 may be configured to determine the flow of gas within the gas meter 102. In some embodiments, the temperature sensor 206 may be configured to determine the gas temperature within the gas meter 102. In some embodiments, the pressure sensor 208 may be configured to determine the pressure of the gas flowing through the gas meter 102.

For example, a gas meter 102 installed within a residential building. Further, the gas meter 102 is installed with a plurality of sensors 104 such as a pressure sensor 208, a temperature sensor 206, a flow sensor 204. Further, the pressure sensor 208 is configured to detect pressure of gas flowing within the gas meter 102. Further, the temperature sensor 206 is configured to detect a gas temperature, and the flow sensor 204 is configured to determine a flow of gas within the gas meter 102. Further, the plurality of sensors 104 are communicatively coupled with at least one processor 106. Further, the at least one processor 106 is configured to receive a data corresponding to the measurement of gas temperature, pressure of gas, and flow of gas within the gas meter 102.

At operation 504, the at least one processor 106 may be configured to determine that there is no flow of gas within the gas meter 102. In some embodiments, the flow sensor 204 of the gas meter 102 may facilitate the at least one processor 106 to determine that there is no flow of gas within the gas meter 102. In some embodiments, the no flow of gas within the gas meter 102 may represent that there is no usage of the gas by the plurality of end-users.

For example, the at least one processor 106 is configured to determine that there is no flow of gas within the gas meter 102 installed within the residential building. Further, the at least one processor 106 utilizes data received from the flow sensor 204 to determined that there is no flow of gas within the gas meter 102. The data corresponds to 0 cubic meter per second.

At operation 506, the at least one processor 106 may be configured to determine fluctuations in the gas temperature upon determining that there is no flow of gas within the gas meter 102. In some embodiments, the at least one processor 106 may be configured to fetch the one or more datasets of the data received from the temperature sensor 206 of the gas meter 102. In some embodiments, the at least one processor 106 may be configured to analyze patterns based at least on the one or more datasets. In some embodiments, the at least one processor 106 may be configured to determine the fluctuations in the gas temperature through the analyzed patterns.

For example, the at least one processor 106 determines fluctuations in the gas temperature upon determining that there is no flow of gas within the gas meter 102 installed within the residential building. Further, the temperature sensor 206 is configured to detect the gas temperature corresponding to a stream of data received from the temperature sensor 206 at different timestamps. Further, the stream of data comprises 30 degree Celsius at 2:00 pm, 35 degree Celsius at 2:15 pm, 38 degree Celsius at 2:30 pm, and 50 degree Celsius at 2:50 pm. This sudden rise of the gas temperature corresponds to the fluctuations in the gas temperature.

At operation 508, the at least one processor 106 may be configured to determine whether there are fluctuations in the pressure of gas within the gas meter 102. In some embodiments, the at least one processor 106 may be configured to determine whether there are fluctuations in the pressure of gas upon determining the fluctuations in the gas temperature. In some embodiments, the at least one processor 106 may be configured to analyze the one or more datasets having data received from the pressure sensor 208.

For example, the at least one processor 106 determines whether there are fluctuations in the pressure of gas within the gas meter 102 installed within the residential building. Further, the pressure sensor 208 is configured to detect the pressure of gas corresponding to a stream of data received from the pressure sensor 208 at different timestamps. Further, the stream of data comprises 15 psi at 2:00 pm, 20 psi at 2:15 pm, 25 psi at 2:30 pm, and 30 psi at 2:50 pm. The uniform increase in pressure depicts there is no fluctuations in the pressure of gas within the gas meter 102.

At operation 510, the at least one processor 106 may be configured to determine the anomaly in the gas meter 102. In some embodiments, the anomaly in the gas meter 102 may be determined upon determining that there is no fluctuation in the pressure of gas within the gas meter 102. In some embodiments, the anomaly may comprise at least one of leak within the gas meter 102 at the site, anomaly in a regulator (i.e., the gas service regulator 210), and an upstream grid anomaly. In some embodiments, the at least one processor 106 may be configured to generate and send the alert to the user upon determining the anomaly in the gas meter 102.

In some embodiments, the generated alert may correspond to the notification comprising at least one type of the anomaly determined in the gas meter and the one or more actions to be taken by the user corresponding to the type of anomaly. In some embodiments, the type of anomaly may comprise at least one of leak within the gas meter 102 at the site, anomaly in the regulator (i.e., a gas service regulator 210), and the upstream grid anomaly. In some embodiments, the one or more actions may comprise at least one of alerting the gas supply grid 200, change the gas meter 102, or repair the gas meter 102.

For example, the at least one processor 106 determined an anomaly in the gas meter 102. Further, the anomaly in the gas meter 102 is determined by the at least one processor 106 upon determining that there is no fluctuation in the pressure of gas within the gas meter 102.

At operation 512, the at least one processor 106 may be configured to determine the gas meter 102 is operating in a normal condition upon determining that there is fluctuation in the pressure of gas within the gas meter 102. In some embodiments, the normal condition of the gas meter 102 may correspond to an optimum flow of the gas from the gas service regulator 210 to the plurality of end-users (i.e., the gas appliance-1 212 and the gas appliance-2 214).

For example, the at least one processor 106 is configured to determine the gas meter 102 is operating in a normal condition upon determining that there is fluctuation in the pressure of gas within the gas meter 102.

The present disclosure streamlines the process of determining the anomaly in the gas meter 102. Embodiments of the present invention may ensure a precise analysis of the anomaly using the data corresponding to detection of gas temperature, pressure of gas, and flow of gas within the gas meter 102. Embodiments of the present invention may determine the anomaly in the gas meter 102 at the site, anomaly in a regulator (i.e., the gas service regulator 210), and an upstream grid anomaly. Embodiments of the present invention may improve detection of the component failure in the gas supply grid 200. Embodiments of the present invention may alert the user about the anomaly in the gas meter 102 by generating the one or more alerts for the user.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
a gas meter installed within a site;
a plurality of sensors coupled to the gas meter, wherein each of the plurality of sensors are configured to generate data corresponding to detection of gas temperature, pressure of gas, and flow of gas within the gas meter; and
at least one processor communicatively coupled to each of the plurality of sensors, wherein the at least one processor is configured to:
receive the data corresponding to the measurement of the gas temperature, the pressure of gas, and the flow of gas within the gas meter;
determine that there is no flow of gas within the gas meter;
determine fluctuations in the gas temperature upon determining that there is no flow of gas within the gas meter;
determine whether there are fluctuations in the pressure of gas within the gas meter, upon determining the fluctuations in the gas temperature; and
determine an anomaly in the gas meter upon determining that there is no fluctuation in the pressure of gas within the gas meter.

2. The system of claim 1, wherein the plurality of sensors comprises at least one of a flow sensor, a temperature sensor, and a pressure sensor.

3. The system of claim 2, wherein the flow sensor is configured to determine the flow of gas within the gas meter, wherein the temperature sensor is configured to determine the gas temperature, and wherein the pressure sensor is configured to determine the pressure of the gas flowing within the gas meter.

4. The system of claim 1, wherein the at least one processor is configured to determine that the gas meter is operating in a normal condition upon determining that there is fluctuation in the pressure of gas within the gas meter.

5. The system of claim 1, wherein the at least one processor is configured to determine whether there are fluctuations in pressure of gas within another gas meter installed within the site, upon determining the anomaly in the gas meter.

6. The system of claim 5, wherein the at least one processor is configured to determine an upstream grid anomaly upon determining that there are no fluctuations in the pressure of gas within the another gas meter.

7. The system of claim 5, wherein the at least one processor is configured to determine whether the pressure of the gas within the another gas meter is normal upon determining that there are fluctuations in the pressure of gas within the another gas meter.

8. The system of claim 7, wherein the at least one processor is configured to determine an anomaly in a regulator associated with the gas meter and the another gas meter, upon determining that the pressure of the gas within the another gas meter is not normal.

9. The system of claim 7, wherein the at least one processor is configured to determine a leak within the gas meter at the site, upon determining that the pressure of the gas within the another gas meter is normal.

10. A method comprising:
receiving, via at least one processor communicatively coupled to a plurality of sensors of a gas meter installed within a site, data corresponding to measurement of gas temperature, pressure of gas, and flow of gas within the gas meter;
determining, via the at least one processor, that there is no flow of gas within the gas meter;
determining, via the at least one processor, fluctuations in the gas temperature upon determining that there is no flow of gas within the gas meter;
determining, via the at least one processor, whether there are fluctuations in the pressure of gas within the gas meter, upon determining the fluctuations in the gas temperature; and
determining, via the at least one processor, an anomaly in the gas meter upon determining that there is no fluctuation in the pressure of gas within the gas meter.

11. The method of claim 10, wherein the plurality of sensors comprises at least one of a flow sensor, a temperature sensor, and a pressure sensor.

12. The method of claim 11, wherein the flow sensor is configured to determine the flow of gas within the gas meter, wherein the temperature sensor is configured to determine the gas temperature, and wherein the pressure sensor is configured to determine the pressure of the gas flowing within the gas meter.

13. The method of claim 10 further comprising determining, via the at least one processor, that the gas meter is operating in a normal condition upon determining that there is fluctuation in the pressure of gas within the gas meter.

14. The method of claim 10 further comprising:
determining, via the at least one processor, whether there are fluctuations in pressure of gas within another gas meter installed within the site, upon determining the anomaly in the gas meter; and
determining, via the at least one processor, an upstream grid anomaly upon determining that there are no fluctuations in the pressure of gas within the another gas meter.

15. The method of claim 14 further comprising:
determining, via the at least one processor, whether the pressure of the gas within the another gas meter is normal upon determining that there are fluctuations in the pressure of gas within the another gas meter; and
determining, via the at least one processor, an anomaly in a regulator associated with the gas meter and the another gas meter, upon determining that the pressure of the gas within the another gas meter is not normal, or
determining, via the at least one processor, a leak within the gas meter at the site, upon determining that the pressure of the gas within the another gas meter is normal.
